# EUROPÄISCHE PATENTANMELDUNG

(11) **EP 3 488 988 A1**
(43) Veröffentlichungstag der Anmeldung: **29.05.2019**
(21) Anmeldenummer: 17203309.4
(22) Anmeldetag: 23.11.2017
(51) Int. Cl.: B29C 45/00, B29D 22/00, B60K 15/03, B29C 65/20, B29L 31/00, B29K 77/00

(54) **VERFAHREN ZUM HERSTELLEN EINES KRAFTSTOFFTANKS, KRAFTSTOFFTANK SOWIE VERWENDUNG VON POLYAMID 6**

(71) Anmelder: Bayerische Motoren Werke Aktiengesellschaft, 80809 München (DE); LANXESS Deutschland GmbH, 50569 Köln (DE)
(72) Erfinder: Erhard, Daniel, 82256 Fürstenfeldbruck (DE); Schulte, Maik, 50825 Köln (DE); Krause, Frank, 51469 Bergisch Gladbach (DE)
(74) Vertreter: Hofstetter, Schurack & Partner

(57) **Zusammenfassung**

Die Erfindung betrifft ein Verfahren zum Herstellen eines Kraftstofftanks (1), insbesondere für ein Kraftfahrzeug, bei welchem wenigstens zwei Teilelemente (2) des Kraftstofftanks (1) spritzgegossen und anschließend zum Begrenzen eines zum Aufnehmen eines Kraftstoffs ausgebildeten Aufnahmeraums (3) des Kraftstofftanks (1) miteinander verbunden werden, wobei die wenigstens zwei Teilelemente (2) aus einem Blasformmaterial spritzgegossen werden.

## Beschreibung

Die Erfindung betrifft ein Verfahren zum Herstellen eines Kraftstofftanks sowie einen Kraftstofftank, vorzugsweise einen Kraftstofftank für ein Kraftfahrzeug, gemäß den Oberbegriffen der unabhängigen Patentansprüche sowie eine Verwendung für unverstärktes Polyamid 6.

Aus der DE 10 2015 015 122 A1 ist ein Verfahren zum Herstellen eines Fluidbehälters für ein Kraftfahrzeug bekannt. Hierbei wird der Fluidbehälter aus wenigstens zwei Teilschalen zusammengesetzt, die durch Spritzgießen ausgebildet werden. Der Fluidbehälter dient einem Zwischenspeichern von Kraftstoff.

Darüber hinaus ist aus der DE 198 14 314 A1 ein Verfahren zur Herstellung von Hohlkörpern aus Thermoplastischem Kunststoff bekannt. Hierbei werden zunächst wenigstens zwei Teilkörper hergestellt und diese anschließend zu einem Gesamthohlkörper zusammengefügt, wobei wenigstens einer der zwei Teilkörper im Pressverfahren geformt wird. Für das Pressverfahren wird als Ausgangsmaterial ein Material verwendet, das zum Blasformen eines Kraftstofftanks geeignet ist. In diesem Zusammenhang wird ausgeführt, dass das Pressformen gegenüber dem Spritzgießen den Vorteil hat, dass sich Kunststoffe einsetzen lassen, die auch für das Blasformen geeignet sind.

Aufgabe der vorliegenden Erfindung ist es, ein Verfahren zum Herstellen eines Kraftstofftanks, insbesondere ein Spritzgießverfahren, sowie einen Kraftstofftank bereitzustellen, vorzugsweise einen Kraftstofftank für ein Kraftfahrzeug, sowie eine Verwendung für unverstärktes Polyamid 6 zu schaffen, sodass der Kraftstofftank besonders einfach herstellbar ist und zudem einem Quetschfluss unterzogen werden kann wie er in einem Schweißverfahren, insbesondere einem Laser-, Vibrations-, Kontakt-, oder Spiegelschweißverfahren, zum Verbinden zweier Polyamid 6 basierter Teilkörper, auftritt.

Diese Aufgabe wird erfindungsgemäß durch ein Verfahren zum Herstellen eines Kraftstofftanks, vorzugsweise einem Kraftstofftank für ein Kraftfahrzeug, durch einen Kraftstofftank für ein Kraftfahrzeug selber sowie durch eine Verwendung für unverstärktes Polyamid 6 mit den Merkmalen der unabhängigen Patentansprüche gelöst. Vorteilhafte Ausführungen der Erfindung sind Gegenstand der abhängigen Patentansprüche und der Beschreibung.

Ein erster Aspekt der Erfindung betrifft ein Verfahren zum Herstellen eines Kraftstofftanks, vorzugsweise eines Kraftstofftanks für ein Kraftfahrzeug, bei welchem wenigstens zwei Teilelemente des Kraftstofftanks spritzgegossen und anschließend zum Begrenzen eines zum Aufnehmen eines Kraftstoffs ausgebildeten Aufnahmeraums des Kraftstofftanks miteinander verbunden werden. Mit anderen Worten wird der Kraftstofftank aus den wenigstens zwei Teilelementen gebildet, wobei die wenigstens zwei Teilelemente jeweils spritzgegossen werden. Anschließend werden die wenigstens zwei Teilelemente miteinander durch wenigstens ein Schweißverfahren verbunden, um den Aufnahmeraum zu bilden, in welchem der Kraftstoff aufgenommen werden kann. Bei dem Kraftstoff handelt es sich vorzugsweise um flüssige und/oder gasförmige Kohlenwasserstoffe. Bei dem Kraftfahrzeug handelt es sich insbesondere um ein Kraftrad, insbesondere um ein Motorrad.

Um eine möglichst einfache Herstellung des Kraftstofftanks zu ermöglichen, ist es erfindungsgemäß vorgesehen, dass die wenigstens zwei Teilelemente aus einem Polyamid 6 basierten Blasformmaterial spritzgegossen werden. Bei dem Blasformmaterial handelt es sich um ein hochviskoses, insbesondere ein hochstrukturviskoses, Polyamid. Das Blasformmaterial weist derartige Eigenschaften auf, dass dieses üblicherweise in einem Blasformverfahren verarbeitet wird. Das Blasformmaterial hat den Vorteil, dass dieses bereits in industriellen Anwendungen im Blasformverfahren zur Anwendung kommt und somit insbesondere zur Herstellung von Kraftstofftanks im Blasformverfahren ausgiebig geprüft ist. Entgegen einer allgemein verbreiteten Meinung und im Rahmen der vorliegenden Erfindung als überraschend festgestellt, eignet sich dieses Polyamid 6 basierte Blasformmaterial sehr wohl zum Spritzgießen. Das spritzgegossene Blasformmaterial ist zudem im Vergleich zu einem üblicherweise spritzgegossenen Spritzgussmaterial besonders einfach weiter verarbeitbar, insbesondere aufgrund dessen Viskosität beim Erwärmen. Durch die Verwendung des Blasformmaterials zum Spritzgießen der wenigstens zwei Teilelemente des Kraftstofftanks und anschließendem Verbinden der zwei Teilelemente können Vorteile eines Spritzgießverfahrens mit vorteilhaften Eigenschaften des Blasformmaterials kombiniert werden. Das Herstellen der wenigstens zwei Teilelemente aus dem Blasformmaterial in dem Spritzgießverfahren hat den Vorteil, dass eine gleichmäßige Wandstärke und/oder eine komplizierte Form bzw. räumliche Ausgestaltung der Teilelemente erreicht werden kann. Darüber hinaus kann eine Ausbildung von besonders wenigen Fäden des Blasformmaterials bei dessen Weiterverarbeitung, insbesondere bei dessen Erwärmung, ermöglicht werden. Hierdurch ist ein besonders einfach verarbeitbarer und besonders dichter Kraftstofftank realisierbar.

In diesem Zusammenhang hat es sich als vorteilhaft gezeigt, wenn das erfindungsgemäß im Spritzguss einzusetzende Material unverstärktes Polyamid 6 ist, das bei einer Scherrate im Bereich von 10 bis 100 pro Sekunde sowie bei einer Temperatur von 280 Grad Celsius eine nach ISO 11443 zu ermittelnde Viskosität im Bereich von 500 bis 2000 Pas (Pascalsekunden) und bei einer Scherrate von 10.000 bis 100.000 pro Sekunde sowie bei einer Temperatur von 280 Grad Celsius eine nach ISO 11443 zu ermittelnde Viskosität im Bereich von 5 bis 100 Pas (Pascalsekunden) aufweist. Im weiteren Verlauf dieser Anmeldung wird dieses Material als unverstärktes Polyamid 6 basiertes Blasformmaterial bezeichnet.

Vorzugsweise liegt die nach ISO 11443 zu ermittelnde Viskosität bei einer Scherrate im Bereich von 10 bis 100 pro Sekunde sowie bei einer Temperatur von 280 Grad Celsius im Bereich von 750 bis 1200 Pascalsekunden.

Vorzugsweise liegt die nach ISO 11443 zu ermittelnde Viskosität bei einer Scherrate im Bereich von 10.000 bis 100.000 pro Sekunde sowie bei einer Temperatur von 280 Grad Celsius im Bereich von 10 bis 60 Pascalsekunden.

Üblicherweise wird ein derartiges hochviskoses Polyamid mit solch einer ausgeprägten Strukturviskosität, welches bei niedrigen Scherraten eine hohe Viskosität und bei hohen Scherraten eine niedrige Viskosität aufweist, nicht im Spritzguss, sondern als Blasformmaterial eingesetzt. Die Viskosität kann - wie oben beschrieben - über eine Scherviskosität nach ISO 11443 oder alternativ mittels Schmelzindex MFI nach DIN ISO 1133 ermittelt werden.

Vorzugsweise weist dieses hochstrukturviskose Polyamid eine langkettige Struktur mit einer Mehrzahl von kurzen Seitenketten auf. Die Arbeiten im Rahmen der vorliegenden Erfindung zeigten, dass diese kurzen Seitenketten sich bei einer hohen Scherrate seitlich an einen langkettigen Mittelstrang anlegen, wodurch das im Spritzguss einzusetzende Material bei hoher Scherrate - eine im Vergleich zu einer Viskosität bei einer niedrigeren Scherrate - niedrigere Viskosität aufweist. Hierdurch lässt sich das unverstärkte Polyamid 6 beim Spritzgießen besonders leicht in die vorgesehene Spritzgießform einleiten, da das Spritzgießen hohe Scherraten des Materials und somit einer niedrige Viskosität auslöst. Aufgrund der hohen Strukturviskosität eignet sich das erfindungsgemäß einzusetzende und üblicherweise als Blasformmaterial einzusetzende unverstärkte Polyamid 6 besonders gut auch zum Spritzgießen eines Kraftstofftanks, da das Material beim Spritzgießen aufgrund der hohen Scherrate eine niedrige Viskosität aufweist und zudem beim Verbinden von Teilelementen mittels Schweißverfahren aufgrund einer niedrigen Scherrate eine vorteilhafte hohe Viskosität aufweist.

Unverstärkt im Sinne der vorliegenden Erfindung bedeutet, dass pro Massenanteil Polyamid 6 in diesem weniger als 0,5 Massenanteile Verstärkungsmaterial, besonders bevorzugt weniger als 0,1 Massenanteile Verstärkungsmaterial, insbesondere Null Massenanteile Verstärkungsmaterial vorliegen, wobei als Verstärkungsmaterialien teilchenförmige oder faserförmige Füllstoffe verstanden werden, vorzugsweise auszuwählen aus der Gruppe Kohlenstofffasern [CAS Nr. 7440-44-0], Glaskugeln, Voll- oder Hohlglaskugeln, insbesondere Glasfasern [CAS Nr. 65997-17-3], gemahlenes Glas, amorphe Kieselsäure [CAS Nr. 7631-86-9], Calciumsilicat [CAS Nr. 1344-95-2], Calciummetasilicat [CAS Nr. 10101-39-0], Magnesiumcarbonat [CAS Nr. 546-93-0], Kaolin [CAS Nr. 1332-58-7], calciniertes Kaolin [CAS Nr. 92704-41-1], Kreide [CAS Nr. 1317-65-3], Kyanit [CAS Nr. 1302-76-7], gepulverter oder gemahlener Quarz [CAS Nr. 14808-60-7], Glimmer [CAS Nr. 1318-94-1], Phlogopit [CAS Nr. 12251-00-2], Bariumsulfat [CAS Nr. 7727-43-7], Feldspat [CAS Nr. 68476-25-5], Wollastonit [CAS Nr. 13983-17-0] und Montmorillonit [CAS Nr. 67479-91-8]. Glasfasern im Sinne der vorliegenden Erfindung sind gemäß "http://de.wikipedia.org/wiki/Faser-KunststoffVerbund" - geschnittene Fasern, auch als Kurzfasern bezeichnet, mit einer mittleren Länge im Bereich von 0,1 bis 5 mm, wobei Faserlängen der einzusetzenden Füllstoffe im Rahmen der vorliegenden Erfindung durch Microfokus-Röntgen-Computertomographie (µ-CT) bestimmt werden; J. Kastner et. al., Quantitative Messung von Faserlängen und - verteilung in faserverstärkten Kunststoffteilen mittels µ-Röntgen-Computertomographie, DGZfP-Jahrestagung 2007 - Vortrag 47, Seiten 1 -8.

Erfindungsgemäß einzusetzendes Polyamid 6 [CAS Nr. 25038-54-4] ist erhältlich durch Ringöffnungspolymerisation aus ε-Caprolactam mit Wasser als Starter.

In einer vorteilhaften Ausgestaltung der Erfindung ist vorgesehen, dass die wenigstens zwei Teilelemente stoffschlüssig verbunden, vorzugsweise verschweißt, insbesondere vibrations-, kontakt-, spiegel- oder laserverschweißt, werden. Der Kraftstofftank kann hierdurch besonders dicht insbesondere besonders permeationsdicht ausgeführt werden. Dabei hat das Blasformmaterial gegenüber einem Spritzgussmaterial, welches üblicherweise bei einem Spritzgießverfahren eingesetzt wird, den Vorteil, dass es sich besonders einfach in einem Schweißverfahren verarbeiten lässt. Bei einer definierten üblichen Schweißtemperatur weist ein übliches Spritzgussmaterial eine derartige Viskosität auf, dass eine saubere Schweißnaht lediglich mit sehr großem Aufwand ausführbar ist. Im Gegensatz hierzu ist das erfindungsgemäß einzusetzende unverstärkte Polyamid 6 basierte Blasformmaterial besonders einfach verschweißbar. Dabei hat das Spritzgießen dieses unverstärkten Polyamid 6 basierten Blasformmaterials den Vorteil, dass das Blasformmaterial besonders einfach in eine gewünschte Form gebracht werden kann und anschließend aufgrund vorteilhafter Schweißeigenschaften des Blasformmaterials besonders einfach verschweißt werden kann.

Hierbei hat es sich als weiterhin vorteilhaft erwiesen, wenn die wenigstens zwei Teilelemente miteinander kontaktverschweißt oder spiegelverschweißt werden. Mittels eines Spiegelschweißverfahrens und/oder mittels eines Kontaktschweißverfahrens können die wenigstens zwei aus dem Blasformmaterial gebildeten Teilelemente besonders einfach, besonders sauber und besonders beständig stoffschlüssig miteinander verbunden werden. Das Spiegelverschweißverfahren der wenigstens zwei Teilelemente hat den Vorteil, dass ein Verzug wenigstens eines der Teilelemente beim Spiegelschweißen ausgeglichen werden kann. Im Gegensatz zum Spiegelschweißverfahren hat das Kontaktschweißverfahren den Vorteil, dass eine Schweißnaht des Kraftstofftanks nicht vollständig in einer Ebene angeordnet sein muss, sondern freiförmig verlaufen kann. Die aus dem Blasformmaterial gebildeten wenigstens zwei Teilelemente haben gegenüber aus einem üblichen Spritzgussmaterial gebildeten Teilelementen den Vorteil, dass diese beim Kontaktschweißen und beim Spiegelschweißen aufgrund einer hohen Viskosität des Blasformmaterials keine Fäden ziehen beziehungsweise im Vergleich zum Spritzgussmaterial weniger Fäden ziehen. Hierdurch kann eine saubere Schweißnaht ohne überschüssige und abstehende Materialfäden erzeugt werden.

In einer weiteren vorteilhaften Ausgestaltung der Erfindung ist vorgesehen, dass in wenigstens eines der zwei Teilelemente beim Spritzgießen ein Bauteil mit eingegossen wird. Im Gegensatz zu einem Blasformverfahren kann bei einer Herstellung der wenigstens zwei Teilelemente im Spritzgießverfahren das Bauteil mit eingegossen, insbesondere umspritzt, werden. Bei dem Bauteil kann es sich vorzugsweise um ein Filterelement, insbesondere einen Kraftstofffilter oder einen Luftfilter handeln. Darüber hinaus ist eine Integration von Steuergeräten oder sonstigen elektronischen Bauteilen, insbesondere eine Benzinpumpe, ein Tankfüllstandsanzeiger, eine Gegensprechanlage oder ein Navigationssystem in wenigstens eines der wenigstens zwei Teilelemente möglich. Über dies können Tanktaschen beziehungsweise Tankboxen wie beispielsweise ein Handschuhfach zur Lagerung von Utensilien wie beispielsweise Handschuhe, Handys, erste Hilfe Sets oder Werkzeuge an dem Kraftstofftank befestigt werden, indem eine jeweilige Halteeinrichtung an wenigstens einem der wenigstens zwei Teilelemente mitspritzgegossen wird. Hierdurch ist eine besonders sichere Befestigung des Bauteils an dem wenigstens einen der zwei Teilelemente ermöglicht. Das Spritzgießen der wenigstens zwei Teilelemente aus dem unverstärkten Polyamid 6 basierten Blasformmaterial hat den Vorteil, dass Einfüllstützen und/oder Befestigungskomponenten, insbesondere Halter oder Gewindeeinsätze, direkt mit wenigstens einem der Teilelemente gespritzt werden können. Überdies können Crashelemente an einer Außenseite des durch die wenigstens zwei Teilelemente gebildeten Kraftstofftanks durch Mitspritzen angeordnet werden. Alternativ oder zusätzlich kann eine Wabenstruktur und/oder wenigstens eine Versteifung und/oder Verrippungen in wenigstens eines der Teilelemente beim Spritzgießen mit integriert werden. Über dies ist ein Integrieren von Designparts jeglicher Art wie beispielsweise ein Logo oder eine Ausprägung oder eine spezielle Geometrie beim Spritzgießen in wenigstens eines der Teilelemente möglich.

In einer weiteren vorteilhaften Ausgestaltung der Erfindung ist vorgesehen, dass aus dem gleichen unverstärkten Polyamid 6 basierten Blasformmaterial wenigstens ein weiteres Bauteil durch Blasformen hergestellt wird. Hierbei werden Blasformen und Spritzguss miteinander zusammen oder kombiniert durchgeführt. Beispielsweise wird aus dem gleichen Blasformmaterial ein Flaschenhalter in einem Blasformverfahren hergestellt und anschließend beispielsweise an dem Kraftstofftank angeordnet. Das bedeutet, dass das unverstärkte Polyamid 6 basierte Blasformmaterial zum einen zum Spritzgießen der wenigstens zwei Teilelemente verwendet wird und zum anderen zum Blasformen des weiteren Bauteils verwendet wird. Es handelt sich somit bei dem Blasformmaterial um ein Material, welches sowohl spritzgegossen als auch blasgeformt werden kann. Hierdurch ist alternativ oder zusätzlich eine stoffschlüssige Verbindung zwischen dem weiteren Bauteil und dem wenigstens einen der wenigstens zwei Teilelemente besonders einfach umsetzbar.

Wird als das Blasformmaterial ein in erkaltetem und erstarrtem Zustand transparentes Material verwendet, so kann an dem aus den wenigstens zwei Teilelementen gebildeten Kraftstofftank ein Kraftstofffüllstand abgelesen werden, wodurch ein Hebelgeber für eine Tankanzeige und folglich Gewicht eingespart werden können. Dies ist insbesondere bei einer Anwendung des Kraftstofftanks bei einem Kraftrad vorteilhaft, da der Kraftstofftank an dem Kraftrad besonders einfach einsehbar ist.

Ein zweiter Aspekt der Erfindung betrifft einen Kraftstofftank mit wenigstens zwei spritzgegossenen und miteinander verbundenen Teilelementen. Mittels der wenigstens zwei miteinander verbundenen Teilelemente wird ein Aufnahmeraum zum Aufnehmen eines Kraftstoffs begrenzt. Bei dem Kraftfahrzeug handelte es sich in diesem Fall insbesondere um ein Kraftrad. Um ein besonders einfaches Herstellen des Kraftstofftanks zu ermöglichen, ist es erfindungsgemäße vorgesehen, dass die wenigstens zwei Teilelemente jeweils aus wenigstens einem unverstärkten Polyamid 6 basierten Blasformmaterial gebildet sind. Hierbei ergibt sich der Vorteil, dass mittels des Spritzgießverfahrens die wenigstens zwei Teilelemente besonders einfach in ihrer Form frei gestaltbar sind, wobei die wenigstens zwei Teilelemente aufgrund des unverstärkten Polyamid 6 basierten Blasformmaterials besonders einfach miteinander verschweißbar sind. Das unverstärkte Polyamid 6 basierte Blasformmaterial der Teilelemente ermöglicht, dass diese beim Verschweißen besonders dicht miteinander verschweißt werden können, sodass an einer Verbindungsstelle zwischen den wenigstens zwei Teilelementen kein Kraftstoff beziehungsweise lediglich eine unwesentliche Menge an Kraftstoff aus dem Kraftstofftank austreten kann. Des Weiteren ermöglicht das Spritzgießverfahren zum Herstellen der wenigstens zwei Teilelemente, dass ein Kühlwasserausgleichsbehälter und/oder Sicherheitssysteme wie ein Motorradairbag in wenigstens eines der wenigstens zwei Teilelemente integriert werden kann. Alternativ oder zusätzlich kann während des Spritzgießverfahrens eine Integration von Lichtwellenleitern in und/oder unter eine Oberfläche wenigstens eines der wenigstens zwei Teilelemente erfolgen, um eine indirekte Fahrzeugbeleuchtung für eine besonders vorteilhafte Wahrnehmung des Fahrzeugs zu ermöglichen. Des Weiteren können die wenigstens zwei Teilelemente durch deren Herstellung in dem Spritzgießverfahren beispielsweise mit einem Hohlraum versehen werden, in dem eine Lagerung von weiteren Betriebsstoffen zusätzlich zu dem Kraftstoff in dem Kraftstofftank lagerbar ist.

In einer weiteren vorteilhaften Ausgestaltung der Erfindung ist vorgesehen, dass die wenigstens zwei Teilelemente jeweils wenigstens zwei unterschiedliche Blasformmaterialien aufweisen, wovon wenigstens eines das erfindungsgemäß einzusetzende unverstärkte Polyamid 6 basierte Blasformmaterial ist. Dabei können die wenigstens zwei Teilelemente in einem kombinierten Spritzgießverfahren aus den zwei unterschiedlichen Blasformmaterialien spritzgegossen werden. Durch einen 2-Komponenten-Spritzguss mit den wenigstens zwei unterschiedlichen Blasformmaterialien können unterschiedliche Blasformmaterialien miteinander kombiniert werden. Beispielsweise weisen die unterschiedlichen Blasformmaterialien unterschiedliche Farben und/oder unterschiedliche Festigkeitswerte auf, sodass beispielsweise mittels eines der Blasformmaterialien Gumminoppen auf einer Oberfläche wenigstens eines der wenigstens zwei Teilelemente geschaffen werden können um die Oberfläche besonders griffig zu gestalten. Des Weiteren können durch den 2-Komponenten-Spritzguss außenhautfähige Oberflächen auf den wenigstens zwei Teilelementen hergestellt werden. Diese Oberflächen können genarbt und/oder genoppt sein und/oder eine alugebürstete Optik aufweisen.

Ein dritter Aspekt der Erfindung betrifft eine Verwendung von unverstärktem Polyamid 6, das bei einer Scherrate im Bereich von 10 bis 100 pro Sekunde sowie bei einer Temperatur von 280 Grad Celsius eine nach ISO 11443 zu ermittelnde Viskosität im Bereich von 500 bis 2000 Pas (Pascalsekunden).und bei einer Scherrate von 10.000 bis 100.000 pro Sekunde sowie bei einer Temperatur von 280 Grad Celsius eine nach ISO 11443 zu ermittelnde Viskosität im Bereich von 5 bis 100 Pas (Pascalsekunden) aufweist, zum Spritzgießen eines Gehäuses, insbesondere eines Kraftstofftanks.

Weitere Merkmale der Erfindung ergeben sich aus den Ansprüchen, den Figuren und der Figurenbeschreibung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar.

Die Erfindung wird nun anhand eines bevorzugten Ausführungsbeispiels sowie unter Bezugnahme auf die Zeichnungen näher erläutert. Es zeigen:
- Fig. 1: eine schematische Perspektivansicht eines Kraftstofftanks für ein Kraftfahrzeug von einer ersten Seite mit zwei spritzgegossenen und miteinander verbundenen Teilelementen, mittels welchen ein Aufnahmeraum zum Aufnehmen eines Kraftstoffs begrenzt wird;
- Fig. 2: eine schematische Perspektivansicht des Kraftstofftanks gemäß Fig. 1 von einer der ersten Seite gegenüberliegenden zweiten Seite; und
- Fig. 3: eine schematische Schnittansicht des Kraftstofftanks mit den zwei Teilelementen, wobei die zwei Teilelemente jeweils aus wenigstens einem Blasformmaterial spritzgegossen sind.

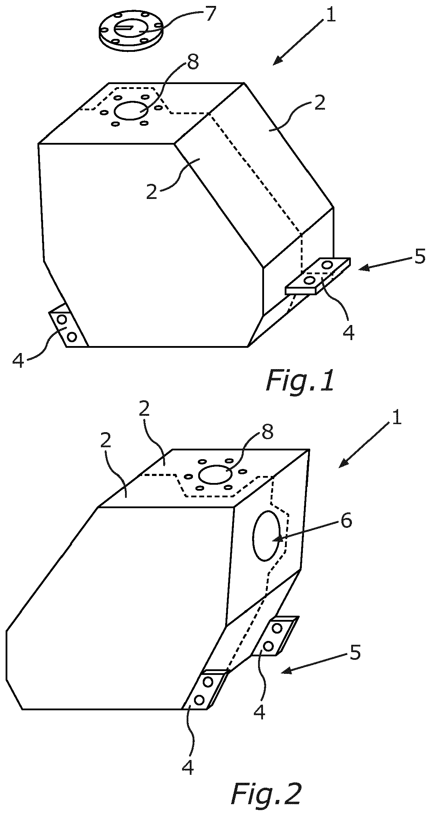

In den Fig. 1 und 2 ist jeweils in einer schematischen Perspektivansicht aus unterschiedlichen Betrachtungsrichtungen ein Kraftstofftank 1 für ein Kraftfahrzeug, insbesondere für ein Kraftrad, insbesondere für ein Motorrad, dargestellt. Der Kraftstofftank 1 dient der Aufnahme von Kraftstoff, mittels welchem eine Verbrennungskraftmaschine des Kraftfahrzeugs antreibbar ist. Der Kraftstofftank 1 umfasst zwei spritzgegossene und miteinander verbundene Teilelemente 2, mittels welchen ein Aufnahmeraum 3 zum Aufnehmen des Kraftstoffs begrenzt wird. Die zwei Teilelemente 2 sind jeweils aus wenigstens einem Blasformmaterial gebildet. Alternativ können die zwei Teilelemente 2 jeweils wenigstens zwei unterschiedliche Blasformmaterialien aufweisen. Bei dem wenigstens einen Blasformmaterial handelt es sich vorliegend um ein erfindungsgemäß einzusetzendes unverstärktes Polyamid 6 basiertes Blasformmaterial gemäß obiger Definition. Insbesondere handelt es sich bei dem Blasformmaterial um Durethan® BC550Z 900116 DUSXBL.

Um den in den Fig. dargestellten Kraftstofftank 1 herzustellen, werden die zwei Teilelemente 2 jeweils aus dem Blasformmaterial spritzgegossen und anschließend stoffschlüssig miteinander verbunden. Vorliegend werden die zwei Teilelemente 2 miteinander kontaktverschweißt.

Der Kraftstofftank 1 umfasst, wie in den Fig. 1 bis 3 zu sehen ist, mehrere Befestigungselemente 4 einer Befestigungseinrichtung 5, mittels welchen der Kraftstofftank 1 an dem Kraftfahrzeug befestigbar ist. Diese Befestigungselemente 4 können beim Herstellen der jeweiligen Teilelemente 2 mit an die jeweiligen Teilelemente 2 angespritzt werden. Somit sind die Befestigungselemente 4 vorliegend einstückig mit den Teilelementen 2 aus dem Blasformmaterial spritzgegossen.

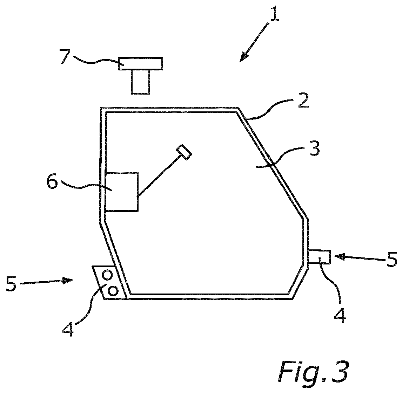

In Fig. 3 ist in einer schematischen Schnittansicht der Kraftstofftank 1 dargestellt. Wie in dieser Schnittansicht zu sehen ist, kann in dem von den zwei Teilelementen 2 umschlossenen Aufnahmeraum 3 eine Kraftstofffördereinheit 6 angeordnet sein. Mittels dieser Kraftstofffördereinheit 6 kann in dem Aufnahmeraum 3 angeordneter Kraftstoff zu einer Verbrennungskraftmaschine des Kraftfahrzeugs gefördert werden. Durch das Herstellen des Kraftstofftanks 1 aus den zwei Teilelementen 2, kann die Kraftstofffördereinheit 6 besonders vorteilhaft vor einem Verbinden der zwei Teilelemente 2 zwischen den zwei Teilelementen 2 angeordnet werden, um nach dem Verbinden der zwei Teilelemente 2 in dem Aufnahmeraum 3 aufgenommen zu sein.

Der Kraftstofftank 1 weist des Weiteren einen Tankdeckel 7 auf, welcher vorliegend aus dem gleichen Blasformmaterial wie die Teilelemente 2 hergestellt ist. Der Tankdeckel 7 wird vorliegend durch Blasformen des Blasformmaterials hergestellt. Mittels des Tankdeckels 7 ist eine Einfüllöffnung 8 des Kraftstofftanks 1 zum Einfüllen des Kraftstoffs in den Aufnahmeraum 3 verschließbar. Folglich sind die Teilelemente 2 und der Tankdeckel 7 aus demselben Blasformmaterial hergestellt, wobei das Blasformmaterial zum Herstellen der Teilelemente 2 spritzgegossen wird und zum Herstellen des Tankdeckels 7 blasgeformt wird.

Dem beschriebenen Kraftstofftank 1 liegt die Erkenntnis zugrunde, dass Kunststofftanks für Brennstoffe für Kraftfahrzeuge üblicherweise in einem Rotationsformverfahren oder in einem Blasformverfahren hergestellt werden. Ein Rotationsformverfahren ist ein Kunststoffbearbeitungsverfahren für Hohlkörper, bei welchem eine Schmelze eines Kunststoffs in einem rotierenden Werkzeug an einer Wand des Werkzeugs erstarrt. Bei Rotationsformverfahren wird mittels biaxialer Rotation und durch Erwärmung des Werkzeugs in dünnwandigen Hohlkörperformen pulverförmiger Thermoplast Schicht um Schicht an Innenflächen der Hohlkörperform abgelagert. Hierdurch werden relativ ungleichmäßige Wandstärken erreicht.

Das Blasformverfahren ist ein Verfahren zur Herstellung von Hohlkörpern aus thermoplastischen Kunststoffen. Beim Blasformen wird ein Vorformling extrudiert beziehungsweise ausgestoßen und in einem formgebenden Blaswerkzeug aufgeblasen, sodass sich der Vorformling an eine Kontur des Blaswerkzeugs anlegt. Abhängig von einer Herstellung des Vorformlings wird zwischen Extrusionsblasformen und Streckblasformen unterschieden. Hierdurch werden relativ ungleichmäßige Wandstärken erreicht.

Für eine Erfüllung von gesetzlichen Anforderungen wird ungefülltes Polyamid zur Herstellung von Kunststofftanks verwendet. Üblicherweise zum Spritzgießen verwendetes ungefülltes Polyamid lässt sich jedoch aufgrund einer Adhäsion seiner Schmelze nur sehr schlecht kontaktschweißen. Zur Herstellung des Kraftstofftanks 1 wären bei Herstellung in einem Spritzgießverfahren bei Verwendung eines üblicherweise für ein Spritzgießverfahren verwendeten Spritzgussmaterials spezielle Materialien und/oder spezielle Schweißverfahren für eine permationsdichte robuste Schweißnaht nötig. Um den Kraftstofftank 1 aus einem Kunststoff für Fahrzeuge permationsdicht schweißen zu können, werden die Teileelemente 2 aus dem Blasformmaterial spritzgegossen. Eine permationsdichte Schweißnaht ist nötig, um den Kraftstofftank 1 für das Kraftfahrzeug, welches Abgasnormen einzuhalten hat, homologieren zu können.

Die Verwendung des Blasformmaterials zum Spritzgießen der Teilelemente 2 beseitigt Nachteile von üblicherweise zum Spritzgießen verwendeten Polyamiden, insbesondere beim Kontaktschweißen, da das Blasformmaterial schmelzestabilisiert ist. Das bedeutet, dass das Blasformmaterial unter hohem Wärmeeinfluss stabiler ist als ein übliches Spritzgussmaterial. Deswegen lässt sich das Blasformmaterial erheblich besser kontaktschweißen als das übliche Spritzgussmaterial. Durch eine definierte Einstellung von Parametern beim Spritzgießen der Teilelemente 2 kann das Blasformmaterial zum Spritzgießen verwendet werden. Das zur Herstellung der Teilelemente 2 verwendete Blasformmaterial erfüllt Anforderungen an eine Permationsdichte sowie an eine Druckfestigkeit und eine Schlagfestigkeit. Durch die beschriebene Verwendung des Blasformmaterials zum Spritzgießen der Teilelemente 2 ist es möglich, Vorteile des Spritzgießverfahrens gegenüber einem Extrusionsblasformens mit den besonders vorteilhaften Eigenschaften des Blasformmaterials beim Spiegelschweißen zu verbinden.

### Bezugszeichenliste

- 1: Kraftstofftank
- 2: Teilelemente
- 3: Aufnahmeraum
- 4: Befestigungselemente
- 5: Befestigungseinrichtung
- 6: Kraftstofffördereinrichtung
- 7: Tankdeckel
- 8: Einlassöffnung

## Patentansprüche

1. Verfahren zum Herstellen eines Kraftstofftanks (1), insbesondere für ein Kraftfahrzeug, bei welchem wenigstens zwei Teilelemente (2) des Kraftstofftanks (1) spritzgegossen und anschließend zum Begrenzen eines zum Aufnehmen eines Kraftstoffs ausgebildeten Aufnahmeraums (3) des Kraftstofftanks (1) miteinander verbunden werden,
**dadurch gekennzeichnet, dass**
die wenigstens zwei Teilelemente (2) aus einem Blasformmaterial spritzgegossen werden.

2. Verfahren nach Anspruch 1,
**dadurch gekennzeichnet, dass**
das Blasformmaterial unverstärktes Polyamid 6 ist, welches eine nach ISO 11443 ermittelte Viskosität von 500 bis 2000 Pascalsekunden bei einer Scherrate von 10 bis 100 pro Sekunde sowie bei einer Temperatur von 280 Grad Celsius und eine nach ISO 11443 ermittelte Viskosität im Bereich von 5 bis 100 Pascalsekunden bei einer Scherrate von 10.000 bis 100.000 pro Sekunde sowie bei einer Temperatur von 280 Grad Celsius aufweist.

3. Verfahren nach Anspruch 1 oder 2,
**dadurch gekennzeichnet, dass**
die wenigstens zwei Teilelemente (2) stoffschlüssig miteinander verbunden, insbesondere verschweißt, werden.

4. Verfahren nach einem der vorhergehenden Ansprüche,
**dadurch gekennzeichnet, dass**
die wenigstens zwei Teilelemente (2) miteinander kontaktverschweißt oder spiegelverschweißt werden.

5. Verfahren nach einem der vorhergehenden Ansprüche,
**dadurch gekennzeichnet, dass**
in wenigstens eines der zwei Teilelemente (2) beim Spritzgießen ein Bauteil (4) mit eingegossen wird.

6. Verfahren nach einem der vorhergehenden Ansprüche,
**dadurch gekennzeichnet, dass**
aus dem gleichen Blasformmaterial wenigstens ein weiteres Bauteil (7) durch Blasformen hergestellt wird.

7. Kraftstofftank (1), insbesondere für ein Kraftfahrzeug, mit wenigstens zwei spritzgegossenen und miteinander verbundenen Teilelementen (2), mittels welchen ein Aufnahmeraum (3) zum Aufnehmen eines Kraftstoffs begrenzt wird,
**dadurch gekennzeichnet, dass**
die wenigstens zwei Teilelemente (2) jeweils aus wenigstens einem Blasformmaterial gebildet sind.

8. Kraftstofftank (1) nach Anspruch 7,
**dadurch gekennzeichnet, dass**
die wenigstens zwei Teilelemente (2) jeweils wenigstens zwei unterschiedliche Blasformmaterialien aufweisen.

9. Verwendung von unverstärktem Polyamid 6, welches bei einer Scherrate im Bereich von 10 bis 100 pro Sekunde sowie bei einer Temperatur von 280 Grad Celsius eine nach ISO 11443 zu ermittelnde Viskosität im Bereich von 500 bis 2000 Pascalsekunden und bei einer Scherrate von 10.000 bis 100.000 pro Sekunde sowie bei einer Temperatur von 280 Grad Celsius eine nach ISO 11443 zu ermittelnde Viskosität im Bereich von 5 bis 100 Pascalsekunden aufweist, zum Spritzgießen eines Gehäuses, insbesondere eines Kraftstofftanks (1).
